(19) Europäisches Patentamt

European Patent Office

Office européen des brevets

(11) **EP 1 327 250 B1**

(12) **EUROPÄISCHE PATENTSCHRIFT**

(45) Veröffentlichungstag und Bekanntmachung des Hinweises auf die Patenterteilung:
**11.02.2004 Patentblatt 2004/07**

(51) Int Cl.[7]: **G21C 5/00**

(21) Anmeldenummer: 02738040.1

(86) Internationale Anmeldenummer:
**PCT/EP2002/005057**

(22) Anmeldetag: **08.05.2002**

(87) Internationale Veröffentlichungsnummer:
**WO 2002/095765 (28.11.2002 Gazette 2002/48)**

(54) **VERFAHREN ZUM ZUSAMMENSETZEN EINES DRUCKWASSERREAKTOR-KERNES UND ENTSPRECHENDER DRUCKWASSERREAKTORKERN**

METHOD FOR ASSEMBLING A PRESSURIZED WATER REACTOR CORE AND CORRESPONDING RECHARGED CORE

PROCEDE POUR L'ASSEMBLAGE D'UN COEUR DE REACTEUR A EAU SOUS PRESSION ET COEUR RECHARGE CORRESPONDANT

(84) Benannte Vertragsstaaten:
**CH DE ES FR LI SE**

(30) Priorität: **18.05.2001 DE 10124637**
**14.09.2001 DE 10145289**

(43) Veröffentlichungstag der Anmeldung:
**16.07.2003 Patentblatt 2003/29**

(73) Patentinhaber: **Framatome ANP GmbH**
**91058 Erlangen (DE)**

(72) Erfinder:
• **STABEL, Jürgen**
**91053 Erlangen (DE)**
• **REN, Mingmin**
**91058 Erlangen (DE)**

(74) Vertreter: **Mörtel & Höfner**
**Patentanwälte**
**Blumenstrasse 1**
**90402 Nürnberg (DE)**

(56) Entgegenhaltungen:
**US-A- 3 897 878        US-A- 5 812 624**

• **DATABASE WPI Week 198843 Derwent Publications Ltd., London, GB; AN 1988-303875 XP002221257 & JP 63 223590 A (TOSHIBA KK), 19. September 1988 (1988-09-19)**
• **PATENT ABSTRACTS OF JAPAN & JP 04 204084 A (HITACHI ENG CO LTD), 24. Juli 1992 (1992-07-24)**
• **PATENT ABSTRACTS OF JAPAN & JP 54 153986 A (TOSHIBA CORP), 4. Dezember 1979 (1979-12-04)**
• **PATENT ABSTRACTS OF JAPAN & JP 02 161390 A (HITACHI LTD ET AL.), 21. Juni 1990 (1990-06-21)**
• **PATENT ABSTRACTS OF JAPAN & JP 02 156191 A (HITACHI LTD ET AL.), 15. Juni 1990 (1990-06-15)**
• **PATENT ABSTRACTS OF JAPAN & JP 02 201291 A (TOSHIBA CORP), 9. August 1990 (1990-08-09)**

## EP 1 327 250 B1

**Beschreibung**

Die Erfindung betrifft das Zusammensetzen eines Kerns eines Druckwasserreaktors, der nach einer Betriebspause, in der insbesondere abgebrannte Brennelemente entfernt, erst teilweise abgebrannte, aber defekte Brennelemente repariert und neue Brennelemente zum Nachladen des Kerns bereitgestellt wurden, nach einem Plan für den nachgeladenen Kern wieder in Betrieb genommen werden soll, sowie einen entsprechend nachgeladenen Kern.

Häufig ist für derart nachgeladene Kerne vorgesehen, dass am Rand des Kernes, also zumindest in der äussersten Reihe- eventuell auch in der zweitäussersten Reihe- Brennelemente mit einer niedrigen Reaktivität angeordnet werden, um die Rate der Neutronen, die aus dem Kern heraus diffundieren und somit für die Aufrechterhaltung der nuklearen Kettenreaktion und die Wärmeerzeugung verloren gehen, gering zu halten ("Low Leakage" - Beladung). Für diese Brennelement-Positionen am Rand des Kernes kommen daher besonders Brennelemente in Frage, die bereits in einem der vorangegangenen Betriebszyklen bestrahlt wurden, sofern diese bestrahlten Brennelemente noch wiederverwendbar sind, weil deren ursprünglich eingesetztes spaltbares Material erst teilweise aufgebraucht ist und sie nicht defekt oder bereits repariert sind.

Defekte entstehen zum Beispiel durch Löcher oder ähnliche Beschädigungen an den Hüllrohren der Brennstäbe oder an den Abstandhaltern, wobei die beschädigten Brennstäbe oder Abstandhalter ersetzt werden, wenn solche Reparaturen noch wirtschaftlich vertretbar sind. Reparaturen sind stets teuer, weil sie zum Schutz des Personals fernbedient unter Wasser durchgeführt werden müssen

In der Regel sind bestrahlte Brennelemente auch verbogen, wobei ein verbogenes Brennelement ebenfalls als defekt gilt, wenn zu befürchten ist, dass es am Ende des nächsten Betriebszyklus nicht mehr aus dem Kern herausgezogen werden kann (weil es sich mit den im Kernverbund eng benachbarten Brennelementen verhakt), oder dass die Steuerstäbe nicht mehr problemlos innerhalb der Führungsrohre des Brennelementes verfahrbar sind. Ein wirtschaftliches Reparaturverfahren, mit dem derart verbogene Brennelemente wieder gerade ausgerichtet werden können, ist gegenwärtig nicht bekannt.

Ein erst teilweise abgebranntes Brennelement, das nicht mehr repariert werden kann, stellt einen erheblichen wirtschaftlichen Verlust dar. Ein Kern, dessen Brennelemente verbogen sind, stellt darüber hinaus selbst dann einen wirtschaftlichen Schaden dar, wenn die einzelnen Brennelemente noch nicht als defekt gelten; die engen Spalte zwischen den im Kernverbund benachbarten Brennelementen sind nämlich im Hinblick auf eine hohe Leistung und optimale Ausnutzung des Brennstoffs gewählt und sollten genau eingehalten werden. Dies ist nur noch bedingt möglich, wenn die Brennelemente verbogen sind.

Soweit die Schäden an Brennstäben und Abstandhaltern chemische (z.B. Korrosion) oder mechanische Gründe (z.B. Reibung an anderen Bauteilen und / oder eingedrungenen Fremdkörpern) haben, werden neue Brennelemente davor durch verbesserte Materialien, Einbau von Fremdkörper-Filtern, verändertes Design oder ähnliche Maßnahmen geschützt. Dadurch können wirtschaftliche Verluste zunehmend verringert werden.

Verbiegungen können verschiedene, im einzelnen bisher nicht genau geklärte Ursachen (z.B. eine Anisotropie in der thermischen Ausdehnung, oder dem strahlungsinduzierten Längenwachstum der Hüllrohre und/oder Steuerstabführungsrohre oder Vorzugsrichtungen im Kühlwasserstrom) haben, wobei manches Material und Design für die Abstandhalter und Führungsrohre, einschließlich deren gegenseitiger Befestigung und der Abstützung der Brennstäbe (also für das "Brennelement-Skelett", in dem die Brennstäbe gehalten sind) weniger anfällig ist für Verbiegungen des Brennelementes.

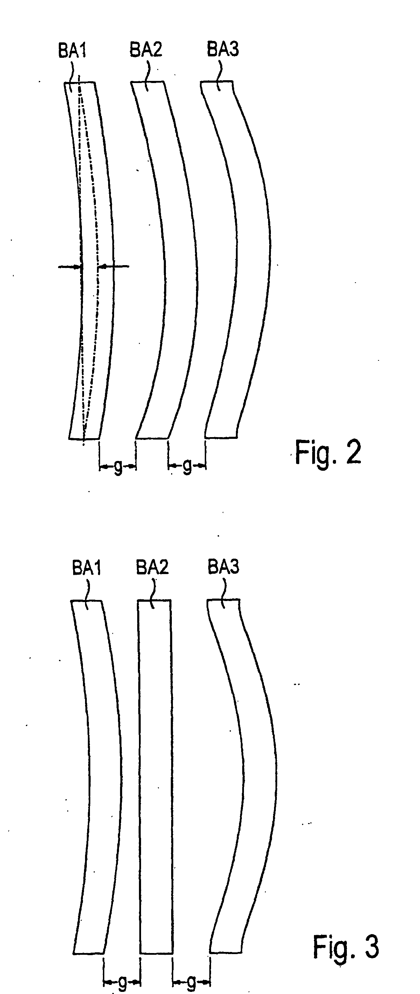

Beim Nachladen eines Kerns hofft man, dass der Einsatz von frischen Brennelementen mit einem derartigen, verbiegungsarmen Skelett verhindert, dass sich die bereits verbogenen und wiederverwendeten Brennelemente noch stärker verbiegen und vorzeitig ausgetauscht werden müssen, und dass sich ein verbogener Kern sogar wieder aufrichtet, wenn nach mehreren Nachladungen eine immer größere Zahl der Brennelemente solche verbiegungsarmen Skelette besitzt. Bis zu diesem Zeitpunkt können aber jene wirtschaftlichen Nachteile, die durch Abweichungen der tatsächlichen Spaltbreite vom optimalen Design entstehen, nicht vermieden werden und nehmen zunächst sogar noch zu, wie anhand der Fig.3 noch deutlich werden wird.

In der JP 04-204 084 A ist vorgeschlagen, die im letzten Betriebszyklus aufgetretene Verbiegung eines Brennelement-Kastens an einem bestimmten Ort des Kernes durch einen Deformationsvektor zu beschreiben und das Brennelement im nächsten Zyklus mit einer derartigen Orientierung seines Kastens wieder einzusetzen, dass der Deformationsvektor des bestrahlten Brennelements im nächsten Zyklus durch eine praktisch gleich große Verbiegung in entgegengesetzter Richtung kompensiert wird. Aber auch dann werden im Kern unverbogene (frische) Brennelemente und Brennelemente unterschiedlicher Verbiegungen nebeneinander angeordnet und daher die Abstandsverhältnisse gestört gegenüber der optimalen Konfiguration des Kernes.

Der Erfindung liegt daher die Aufgabe zugrunde, wirtschaftliche Nachteile, die auf Verbiegungen der Brennelemente eines Kernes im Druckwasserreaktor zurückgehen, weitgehend zu vermeiden.

Zur Lösung der Aufgabe setzt die Erfindung beim Zusammensetzen des Kerns an. Wie bereits erwähnt wurde, werden bei einem solchen Zusammensetzen auf Brennelementpositionen, für die gemäß eines vorgegebenen Beladeplanes bestrahlte und wiederverwendbare Brennelemente verfügbar sind, solche wiederverwendbaren Elemente eingesetzt. Gemäß der Erfindung werden wiederverwendbare Brennelemente, die durchgebogen sind und am Rand des Kernes eingesetzt werden, dabei derart orientiert, dass das Maximum ihrer Durchbiegung auf einer Außenseite des Kerns liegt.

Bei einem solchen Kern, bei dem in Brennelementpositionen am Rand des Kerns bestrahlte und durchgebogene Brennelemente eingesetzt sind, sind also erfindungsgemäß diese Brennelemente des Randes derart orientiert, dass das Maximum ihrer Durchbiegung auf einer Aussenseite des Kerns liegt. Damit kann bereits in kurzer Zeit, im wesentlichen sogar in einem Zyklus, erreicht werden, dass ein Kern, der vor der Nachladung relativ stark durchgebogene Brennelemente enthielt, wieder praktisch gerade gerichtet wird. In dem Maße, in dem stark durchgebogene Brennelemente, die schon mehrere Zyklen bestrahlt wurden, aufgerichtet werden, werden dann also auch Kräfte verringert, die von diesen Brennelementen auf frische oder noch kaum von diesen Brennelementen auf frische oder noch kaum verbogene Brennelemente ausgeübt werden und verbiegend wirken könnten. Ferner werden zwischen den Brennelementen diejenigen Spalte, deren Breite über dem Mittelwert liegt, verkleinert und Spalte, die unter dem Mittelwert liegen, vergrößert. Dabei wird daher die Spaltbreite dem geplanten Optimalwert angenähert.

Die Erfindung geht dabei von der Erkenntnis aus, dass beim Aufbau der bekannten Druckwasserreaktoren eine Kraft von der Strömung auf die Brennelemente des Kerns ausgeübt wird, die radial ausgerichtet ist und vom Zentrum ausgehend stetig zum Rand zu abnimmt. Ferner kann aus den Beobachtungen und Messungen an bestrahlten Kernen auf eine Wechselwirkung zwischen den Brennelementen und dem Kühlwasser geschlossen werden, welche im Kernverbund kleinere Spalte auf Kosten der größeren Spalte vergrößert. Außerdem sind im Zentrum des Kernes die Brennelemente anscheinend praktisch "eingefroren" in dem Sinn, dass sie nur plastisch deformiert sind. Wenn am Rand des Kernes Brennelemente mit einem niedrigen Restabbrand (oder jedenfalls mit einer Masse an noch spaltbarem Material, die niedriger ist als der Mittelwert der entsprechenden Massen aller Brennelemente des Kerns) angeordnet sind, wie dies bei der erwähnten "Low Leakage"-Beladung vorgesehen ist, wird während des Reaktorbetriebes eine Flussverteilung der schnellen Neutronen erzeugt, bei der die Flussdichte am Rand niedrig ist, so dass dort die Brennelemente elastisch sind und noch wenig Kriechen ("Creep") zeigen.

Daher wirken die Kräfte, die von einer Brennelement-Reihe am Rand des Kerns ausgeübt werden, ins Innere des Kerns. Zu einem Gleichgewichtszustand mit den angegebenen, willkommenen Wirkungen kommt es, wenn die äußeren Brennelemente nach außen durchgebogen sind. Deshalb werden gemäß der Erfindung bewusst und vom Anfang des neuen Betriebszyklus an am Rand des Brennelementes bestrahlte Brennelemente eingesetzt, die bereits entsprechend durchgebogen sind.

Dabei wird ein Brennelement als "durchgebogen" bezeichnet, wenn seine vertikale Mittellinie ungefähr C-förmig gebogen ist; (dies ist die normale Form eines bestrahlten Brennelementes). Entsprechend wird als "Maximum der Durchbiegung" der Abstand des Scheitelpunktes dieser C-förmigen Mittellinie von der Mittellinie eines auf der gleichen Position eingesetzten, unverbogenen Brennelementes bezeichnet, und als "mittlere Durchbiegung" der Mittelwert der Abstände aller Punkte auf der C-förmigen Mittellinie. Die Definitionen sind auch übertragbar auf andere Verbiegungen, bei denen sich am oberen und/oder unteren Ende einer c-förmigen Verbiegung noch eine deutlich geringere Verbiegung in irgendeiner Richtung anschließt.

Eine Brennelement-Position "liegt am Rand des Kerns", wenn das in dieser Position eingesetzte Brennelement eine Seite besitzt, die einem auf einer anderen Position im Kern eingesetzten Brennelement benachbart ist, und die dieser Seite diametral gegenüberliegende Seite des Brennelementes keinem auf einer Brennelementposition des Kerns eingesetzten Brennelement benachbart ist.

Die Erfindung schließt nicht aus, dass einige Brennelemente am Rand des Kernes nicht durchgebogen sind oder jedenfalls kein ausgeprägtes Maximum der Durchbiegung besitzen. In jedem Fall sieht die Erfindung aber eine Gruppe von durchgebogenen Brennelementen vor, wobei alle Brennelemente am Rand, deren maximale Durchbiegung über einem gewissen Grenzwert liegen, diese Gruppe bilden und auf die angegebene Weise orientiert sind.

Sind die für den Rand vorgesehenen Brennelemente sehr unterschiedlich stark durchgebogen, so werden bevorzugt die etwa gleich durchgebogenen Brennelemente möglichst äquidistant über den Rand verteilt. Es ist aber auch unschädlich wenn vereinzelte Positionen am Rand von Brennelementen besetzt werden, die praktisch nicht durchgebogen sind.

Bevorzugt werden auch in Brennelementpositionen, die einer Randposition benachbart sind, durchgebogene Brennelemente mit einer in gleicher Richtung orientierten Durchbiegung eingesetzt.

Entscheidend ist, dass die am Rand eingesetzten Brennelemente so eingesetzt werden sollen, dass das Maximum ihrer Durchbiegung <u>nicht</u> in das Kerninnere zeigt, falls sie überhaupt ein ausgeprägtes Maximum der Durchbiegung haben. Sollte also ein Brennelement derart verbogen sein, dass das Maximum der Durchbiegung seiner vertikalen Mittellinie nicht auf eine seiner vier Seiten sondern auf eine Ecke zwischen zwei Seiten seines quadratischen Querschnittes weist, so ist darauf zu achten, dass mindestens eine dieser zwei Seiten eine Außenseite des Kernes ist (d.h. keinem weiteren Brennelement benachbart ist). Auch ein derartig orientiertes Brennelement wird als ein Brennelement bezeichnet, dessen Maximum der Durchbiegung auf der Außenseite des Kernes liegt.

Diese und weitere bevorzugte Ausbildungen der Erfindung ergeben sich aus den Figuren. Es zeigen:

Fig. 1            einen Querschnitt durch einen Kern eines Druckwasserreaktors;

Fig. 2            drei in einem bestrahlten Kern nebeneinander sitzende Brennelemente;

Fig. 3            die Situation der Fig. 2 nach Ersetzen des mittleren bestrahlten Brennelementes durch ein unverbogenes, frisches Brennelement;

Fig. 4            ein Beispiel einer quer durch den Kern laufenden Reihe aus 14 Brennelementen;

Fig. 5            das Maximum der Durchbiegung der in Fig. 4 gezeigten Brennelemente im Gleichgewichtszustand als Funktion ihrer Position, berechnet aus einem ersten, einem frischen Kern entsprechenden Satz von Anfangswerten der Durchbiegung;

Fig. 6            die aus dem für Fig. 5 berechneten Gleichgewichtszustand folgende Breite der Spalte zwischen den Brennelementen als Funktion ihrer Position;

Fig. 7 und 8      die den Figuren 5 und 6 entsprechenden Funktionen für einen aus einem zweiten Satz von Anfangswerten berechneten Gleichgewichtszustand;

Fig. 9 und 10     die den Figuren 5 und 6 entsprechenden Funktionen für einen aus einem dritten Satz von Anfangswerten berechneten Gleichgewichtszustand, wobei dieser dritte Satz der Anfangswerte die Wirkung des erfindungsgemäßen Verfahrens und Kerns belegt,

Fig. 11 und 12    die den Figuren 7 und 8 entsprechenden Funktionen, wenn der Gleichgewichtszustand ohne Berücksichtigung der Wechselwirkung zwischen Brennelementen und dem Wasser berechnet wird; und

Fig. 13           ein Schema für das erfindungsgemäße Verfahren.

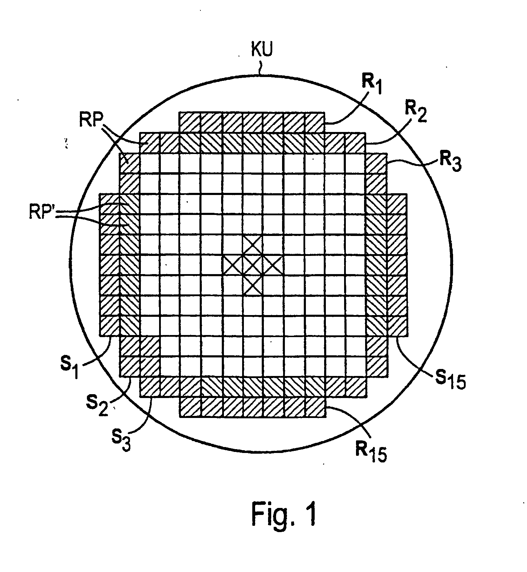

Der in Fig. 1 beispielhaft gezeigte Kern enthält 15 Reihen R1 bis R15 und 15 dazu senkrechte Spalten S1 bis S15 mit Positionen von Brennelementen. Gemäß dem Beladeplan wird an den Positionen RP am Rand des Kerns ( bzw. an den Positionen RC im Zentrum) ein Fluß von etwa $1 \cdot \exp 13$ (bzw. $3 \cdot \exp 14$) / (sek•cm$^2$) schneller Neutronen erzeugt. Hierzu werden die Positionen RP sowie die dazu benachbarten Positionen RP' mit bestrahlten Brennelementen besetzt , die einen relativ geringen Rest-Abbrand besitzen, während mindestens mehrere andere Positionen, insbesondere Positionen RC, mit frischen, hochaktiven Brennelementen besetzt werden. Der ganze Kern ist von einer Kernumfassung KU innerhalb des (nicht dargestellten) Reaktordruckbehälters umgeben.

Der Beladeplan hat optimierte Verhältnisse bei Betriebstemperaturen zum Ziel und geht davon aus, dass die Brennelemente mit ihrem Brennelement-Fuß in einem Norm-Abstand voneinander auf der unteren Kerngitterplatte verankert sind und geradlinig nach oben stehen, so dass sich ein Spalt konstanter Norm-Breite g (hier: g = 1mm) ergibt. In Fig.2 sind drei nebeneinander angeordnete bestrahlte und daher verbogene Brennelemente BA1, BA2, BA3 dargestellt, die zunächst gleichsinnig verbogen sind, jedoch unterschiedliche mittlere Durchbiegungen aufweisen, so dass die Spalte im Längsschnitt einer konkav-konvexen Linse gleichen.

Die Länge.der Brennelemente beträgt etwa 4 m, sodass eine maximale Durchbiegung von 4 mm eine hohe mechanische Festigkeit erfordert. Solche und noch höhere Durchbiegungen werden häufig beobachtet. So haben schon Brennelemente, die zu Beginn eines Zyklus um 4 mm nach einer Seite durchgebogen waren, innerhalb eines einzigen Zyklus eine Durchbiegung von 6 mm nach der anderen Seite erreicht.

Der Mittelwert der Spaltbreite unterscheidet sich wegen des konkav - konvexen Längsschnitts weit weniger von der Norm-Breite g. Dies ändert sich jedoch, wenn das mittlere Brennelement durch ein frisches oder jedenfalls praktisch gerades Brennelement ersetzt wird, wie Fig. 3 zeigt. Die Spalte zu beiden Seiten des geraden Brennelements erzeugen wegen ihrer jetzt sehr unterschiedlichen Breiten eine Anisotropie, die dazu führen kann, dass die vorgesehene Leistung deutlich überschritten wird.

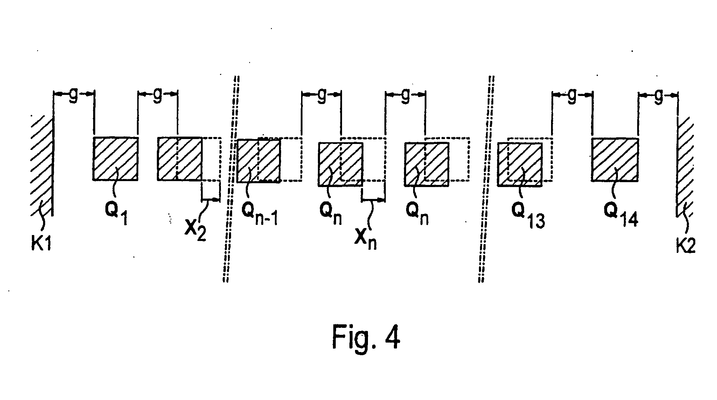

Für eine Modellrechnung wird in Fig. 4 eine Reihe von Brennelementen $Q_1$ bis $Q_{14}$ betrachtet, die zwischen den Wänden K und K' der Kernumfassung verläuft. Die Position der Brennelemente ist durch die Normlage der Brennelement-Füße gegeben, bei der alle Abstände gleich g angenommen werden. Das Modell betrachtet einen Schnitt etwa auf halber Höhe der Elemente, wo die Elemente $Q_n$ (n = 1, ..., 14)eine Durchbiegung $X_n$ besitzen. Für das statistische Gleichgewicht wird angesetzt:

Brennelement $Q_1$:

$$F_1 + F_{k,1} + \alpha \cdot (g - X_2 - X_1 - g - X_1 ) - C^* (X_1 - X_{1,0} ) = 0$$

Brennelement $Q_n$:

$$F_n + F_{k,n} + \alpha \cdot (g - X_{n+1} - X_n - g - X_n + X_{n-1} ) = 0$$

Brennelement $Q_{14}$:

$$F_{14} + F_{k,14} + \alpha \cdot (g - X_{14} - g - X_{14} + X_{13}) - C^* (X_{14} - X_{14,0}) = 0$$

Das Kühlwasser übt eine globale äußere Kraft auf die Elemente aus, die im Kern radial nach außen wirkt und erfahrungsgemäß in der Kernmitte etwa 30N beträgt und am Rand ($Q_1$ und $Q_{14}$) verschwindet. Wenn das Brennelement irgendwo anstößt, tritt eine Kontaktkraft $F_{k,n}$ auf. Bisher sind solche Kontakte zwischen den Brennelementen nur selten beobachtet worden, denn offensichtlich tritt eine derartige Wechselwirkung zwischen den Brennelementen und dem Kühlwasser auf, dass die Spalte zwischen den Elementen vergrößert werden, wenn sie kleiner als die mittlere Spaltbreite sind, und verkleinert, wenn sie größer sind (bei der Geometrie des Modells ist die mittlere Spaltbreite zwangsläufig gleich der Normbreite g) Diese Wechselwirkung kann viele Befunde erklären, die sonst nicht erklärbar sind; im Modell wird angenommen, dass diese Kraft proportional ist zur Differenz der Spaltbreiten zu beiden Seiten des Brennelements. Der entsprechende Wechselwirkungsparameter $\alpha$ wird mit dem wert 50 N/mm angesetzt, was - in Übereinstimmung mit Experimenten und Erfahrung, für benachbarte Spalte von $1/9$ mm eine Kraft von 400N ergibt.

Ferner kann aus der Erfahrung und aus Messungen geschlossen werden, dass die Brennelemente im Bereich des hohen Neutronenflusses in der Kernmitte keine Elastizität mehr besitzen (sie sind "eingefroren") und nur noch eine plastische Verformung zeigen, die durch die höhere Neutronendichte möglich ist und im Gleichgewicht mit den äußeren Kräften steht. Im Bereich kleiner Flußdichte (also am Rand) ändert sich die entsprechende plastische Durchbiegung $X_{1,0}$ und $X_{14,0}$ der Brennelemente $Q_1$ und $Q_{14}$, die bereits von diesen bestrahlten Brennelementen in den Beginn des Betriebszyklus mitgebracht werden, nicht wesentlich, jedoch muss in diesem Bereich die Elastizität berücksichtigt werden, z.B. durch einen Parameter C der Steifigkeit werden ( C = 250 N/mm ).

Offensichtlich hängt dann aber der Gleichgewichtszustand des Kernes insgesamt nur noch von den global wirkenden äußeren Kräften $F_n$ und den von den äußeren Brennelementen bereits am Beginn des Zyklus mitgebrachten plastischen Durchbiegungen $X_{1,0}$ und $X_{14,0}$ ab.

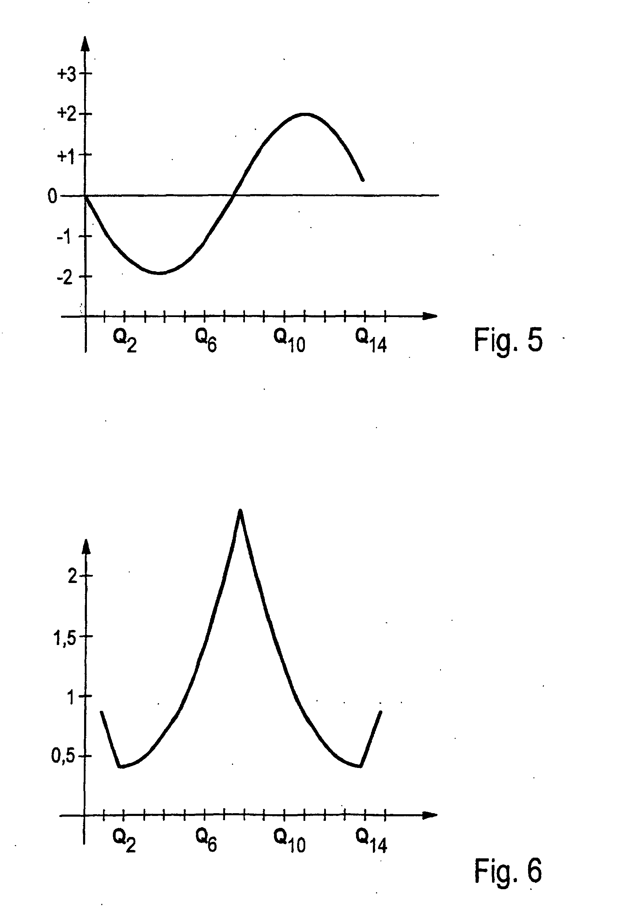

Werden am Rand unverbogene (also frische) Brennelemente eingesetzt, so ist demnach $X_{1,0} = 0$ und $X_{14,0} = 0$ zu setzen. Die Ergebnisse der Rechnung zeigt Fig. 5 für die Durchbiegung $X_n$ der Brennelemente $Q_1$ bis $Q_{14}$ am Ende des Zyklus: die Elemente sind alle durchgebogen, die Elemente $Q_1$ und $Q_{14}$ am Rand am wenigsten. Von der Kernmitte ausgehend, haben die Durchbiegungen auf den beiden Seiten den gleichen Betrag, aber entgegengesetztes Vorzeichen (Richtung), sie sind radial nach außen gerichtet.

Wie Fig. 6 zeigt, haben dabei die Spalte $GP_{0/1}$ (zwischen der Wand K und dem Element $Q_1$) und $GP_{14/0}$ (zwischen $Q_{14}$ und K') praktisch die Normbreite g und beim Mittelspalt $GP_7$ (zwischen den Brennelementen $Q_7$ und $Q_8$) nimmt die mittlere Spaltbreite G einen Maximalwert $G_{max}$ = ca. 2,5•g an ( d.h. knapp 2,5 mm).

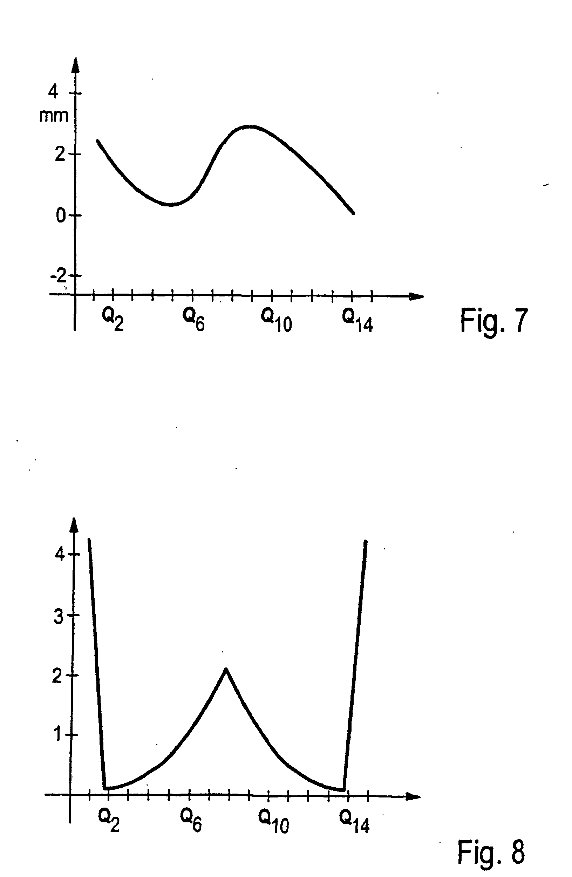

$X_{1,0}$ = 4mm, $X_{14,0}$ = 0 mm bedeutet, dass das Brennelement $Q_1$ (stellvertretend für die Mehrzahl oder alle Brennelemente auf dieser Seite des Kern-Randes) zu Beginn des Zyklus entsprechend seiner Vorgeschichte um 4 mm zum anderen Kernrand gebogen ist. Das entsprechende Brennelement $Q_{14}$ auf der anderen Seite des Kernrands ist dabei als gerade angenommen. Die Rechenergebnisse sind in Fig. 7 und Fig. 8 dargestellt: alle Durchbiegungen haben das gleiche Vorzeichen, gehen also (im Gegensatz zur radialsymmetrischen Verteilung nach Fig. 5) alle in die gleiche Richtung. Ein solches Verhalten ist realistisch und bei vielen Kernen am Ende eines Zyklus beobachtet worden. Das bereits anfangs durchgebogene Rand-Brennelement $Q_{14}$ zeigt die maximale Durchbiegung. An diesem Rand des Kerns tritt auch die maximale Spaltbreite $G_{max}$ auf. Sie beträgt 4,2 mm.

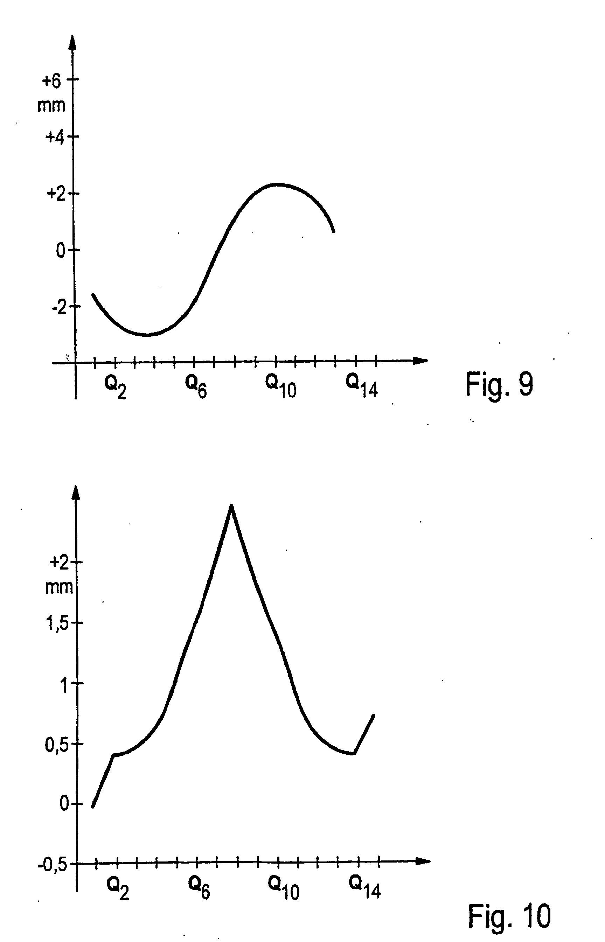

Wird aber das verbogene Rand-Brennelement $Q_1$ mit entgegengesetzter Orientierung seiner Durchbiegung eingesetzt, (d. h. vorher um 180° um seine Längsachse gedreht), so ist $X_{1,0}$ =- 4mm, $X_{14,0}$ = 0 mm. Die Durchbiegung zeigt also jetzt nach außen, wie dies in der Erfindung vorgesehen ist. Das Ergebnis ( Fig. 9 und 10 ) zeigt jetzt nicht mehr die Orientierung "alle in eine Richtung" wie im Fall der Fig. 7 und 8, sondern wieder eine Radialsymmetrie wie bei einem frischen Kern (Fig. 5 und 6). Diese Radialsymmetrie wird also auch in der spiegelbildlichen Situation mit $X_{1,0}$ = 0mm, $X_{14,0}$ = 4 mm erzeugt, bei der das Brennelement $Q_{14}$ entgegengesetzt durchgebogen (d.h. aus dem Inneren des Kernes heraus) ist.

Daher ergeben sich die Verhältnisse der Fig. 9 und 10 erst recht bei $X_{1,0}$ =- 4mm, $X_{14,0}$ = 4 mm - oder allgemein: wenn Durchbiegungen, soweit sie am Rand des Kerns vorhanden sind, stets nach außen orientiert werden, wie in der Erfindung vorgesehen ist.

Die Fig. 9 und 10 erscheinen ebenfalls realistisch, denn ein solches Gleichgewicht, das sich als besonders resistent gegen Verbiegungen zeigt, ist tatsächlich bereits bei mindestens einem Kern beobachtet worden. Die protokollierten Daten über Verbiegungen und Spaltbreiten am Ende des Zyklus sowie aus der Vorgeschichte dieses Reaktors sind konsistent mit der Annahme, dass hier zumindest in die überwiegende Anzahl der Brennelement-Positionen am Rand des Kernes bestrahlte Brennelemente eingesetzt waren, deren Durchbiegungen nach außen orientiert waren und zu einem Verhalten nach den Fig. 9 und 10 geführt haben.

Ebenso lässt sich aus dem Vergleich von Messungen die aus dieser Modellrechnung folgende Behauptung bestätigen, dass ein qualitativer Übergang von einer Verbiegung "radial nach außen" zu einer Verbiegung "alles in eine Richtung" auftritt, wenn für einige Rand-Brennelemente von einer Orientierung ihrer anfänglichen Durchbiegung auf eine lediglich um 180° gedrehte Anfangs-Orientierung übergegangen wird.

Nach Fig. 9 ist die maximale Durchbiegung gegenüber der Figur 7 verringert, und sogar stark verringert gegenüber der bereits mitgebrachten und zu Beginn vorliegenden plastischen Durchbiegung $X_{1,0}$ = 4mm des Rand-Brennelements $Q_1$. Die maximale Spaltbreite $G_{max}$ (Fig. 10) ist gegenüber Fig. 8 ebenfalls von etwa 4,2 mm (am Kernrand) auf etwa 2,5 mm (in der Kern-Mitte) verringert.

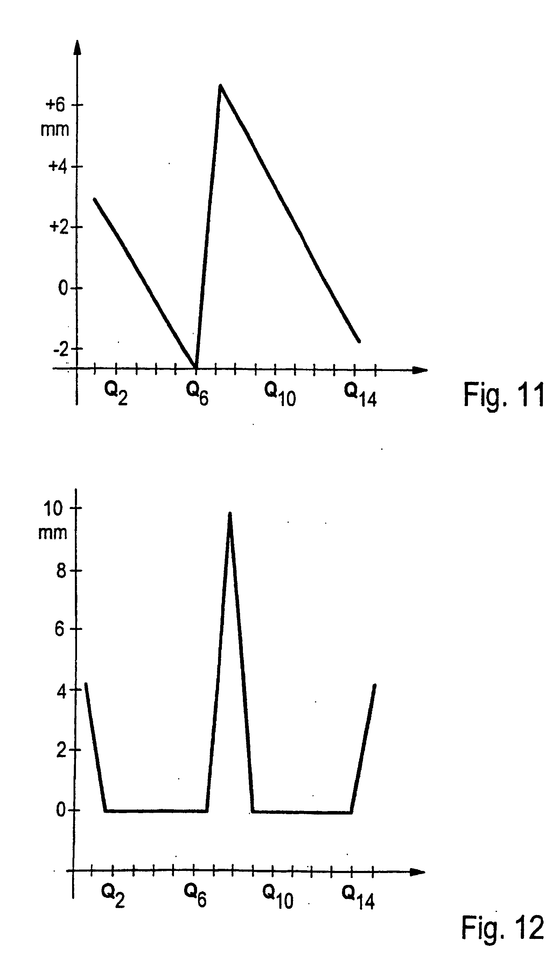

Für die hier betrachteten Effekte erscheint wesentlich, dass zwischen den Skeletten der eingesetzten Brennelemente und dem Kühlwasser-Strom eine Wechselwirkung (hier durch den Parameter $\alpha$ in die Modellrechnung eingeführt) besteht. Setzt man für $X_{1,0}$ = 4 mm und $X_{14,0}$ = 0 (also den Fall der Figuren 7 und 8) diesen Parameter zu Null, so ergibt die Modellrechnung die Figuren 11 und 12 - ein Verhalten, das nie beobachtet wurde, während das beobachtete Verhalten vieler Kerne den Figuren 7 und 8 gleicht.

Zum erfindungsgemäßen Zusammensetzen des Kernes ist es erforderlich, die Durchbiegungen der Rand-Brennelemente der bestrahlten Kerne zu kennen. Entsprechende Messungen können durchgeführt werden, wenn die Brennelemente, deren Rest-Aktivität entsprechend dem Beladungsplan für eine Wiederverwendung geeignet erscheint, in einer Inspektionsstation auf Defekte untersucht werden, wie das bereits in der Patentliteratur beschrieben ist. Es ist aber auch möglich, das Brennelement in dem Zeitpunkt, in dem es aus dem alten Reaktorkern herausgehoben und/oder anschließend in die für den neuen Kern vorgesehen Position gefahren wird, an optischen oder Ultraschall-Sensoren vorbei zu bewegen, die seine Außenabmessungen (z.B. die Position seiner Abstandhalter) in vertikaler Längsrichtung abtasten.

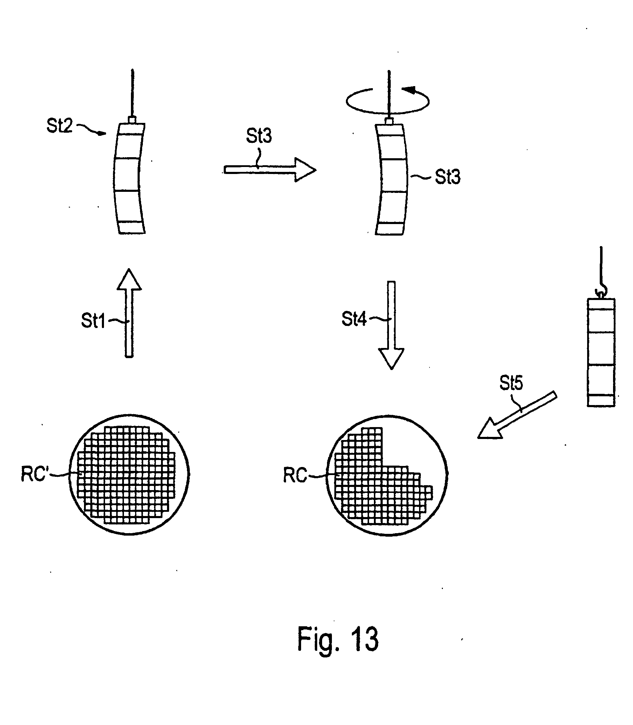

Insgesamt ergibt sich dann beispielsweise das in Fig. 13 schematisch gezeigte Verfahren: Nach dem Abschalten des Reaktors und dem Ende des letzten Betriebszyklus werden die Brennelemente in einem Schritt St1 mittels einer Brennelement-Lademaschine aus dem innerhalb des Reaktordruckbehälters angeordneten, alten Reaktorkern RC' heraus angehoben und in einem Schritt St2 wird ihre Verbiegung gemessen, falls sie am Rand des neu zusammenzusetzenden Kernes wiederverwendet werden sollen. In einem Schritt ST3 werden die Brennelemente in die gemäß dem Beladeplan vorgesehene Position gebracht und dabei entsprechend der erfindungsgemäß vorgesehenen Orientierung gegebenenfalls um ihre Längsachse gedreht . Anschließend werden sie wieder in den Reaktordruckbehälter abgesenkt (Schritt St4), nämlich auf die sich aus dem Beladeplan ergebende Brennelement-Position in dem neu zusammenzusetzenden Kern. Auf die anderen Position des neuen Kernes werden teils ebenfalls dem alten Kern entnommene Brennelemente, teils frisch hergestellte Brennelemente eingesetzt, wie durch Schritt St5 angedeutet ist.

Wie bereits erwähnt, ist der im Zyklus auftretende Gleichgewichtszustand von den Anfangsbedingungen für die Deformation der Rand-Brennelemente, aber nicht von den entsprechenden Anfangsbedingungen im Inneren des Kernes abhängig. Solange die inneren Brennelemente wenigstens zu Beginn des Zyklus noch ein störungsfreies Einfahren der Steuerstäbe erlauben und ohne Probleme zwischen die benachbarten Brennelemente eingesetzt werden können, brauchen sie nicht als defekt angesehen und ersetzt zu werden, vielmehr kann erwartet werden, dass sie sich bei Anwendung der Erfindung (aufgrund der nachgewiesenen Wechselwirkung mit dem Kühlwasser) auf ein tolerierbares Maß zurück biegen. Auf ihre Durchbiegung braucht also nicht geachtet zu werden.

Ebenso geht aus der Modellbetrachtung hervor, dass nicht alle Rand-Brennelemente eine deutliche und nach außen gerichtete Durchbiegung besitzen müssen. Es erscheint nicht zu stören, wenn einige - wie aus Gründen des Anlagenschutzes manchmal vorgesehen ist - unverbogene Dummy - Brennelemente oder Brennelemente mit geringer Aktivität, die (z.B. aufgrund einer aus anderen Gründen erfolgten Reparatur) nicht nennenswert verbogen sind, am Rand eingesetzt werden.

## Patentansprüche

1. Verfahren zum Zusammensetzen des Kerns eines Druckwasserreaktors, wobei auf Brennelement-Positionen, für die bestrahlte und gemäß eines vorbestimmten Beladeplanes wiederverwendbare Brennelemente verfügbar sind, solche wiederverwendbaren Brennelemente eingesetzt werden, **dadurch gekennzeichnet, dass** wiederverwendbare Brennelemente, die durchgebogen sind und am Rand des Kerns eingesetzt werden, dabei derart orientiert werden, dass das Maximum ihrer Durchbiegung auf einer Außenseite des Kernes liegt.

2. Verfahren nach Anspruch 1, **dadurch gekennzeichnet, dass** der Plan für die Positionen am Rand des Kernes Brennelemente mit einer unter dem Mittelwert des Kerns liegenden Reaktivität vorsieht.

3. Verfahren nach Anspruch 1 oder 2, **dadurch gekennzeichnet, dass** in Brennelement-Positionen, die benachbart sind zu den Brennelement-Positionen am Rand des Kerns, durchgebogene Brennelemente eingesetzt werden, und dabei derart orientiert werden, dass ihre Durchbiegungen zum Rand des Kernes weisen.

**4.** Kern eines frisch nachgeladenen Druckwasserreaktors, bei dem in Brennelement-Positionen am Rand des Kerns bestrahlte und durchgebogene Brennelemente eingesetzt sind, **dadurch gekennzeichnet, dass** diese Brennelemente am Rand derart orientiert sind, dass das Maximum ihrer Durchbiegung auf einer Außenseite des Kerns liegt.

**5.** Kern nach Anspruch 4, **dadurch gekennzeichnet , dass** jedes Brennelement auf einer Positionen am Rand des Kerns und jedes einem solchen Brennelement benachbarte Brennelement entweder praktisch nicht durchgebogen ist oder eine Durchbiegung besitzt, die vom Kern nach außen weist.

**6.** Kern nach einem der Ansprüche 4 oder 5, **dadurch gekennzeichnet, dass** die spaltbare Masse jedes am Rand angeordneten Brennelementes unter dem Mittelwert aller Brennelemente des Kerns liegt.

**Claims**

**1.** Method for assembling the core of a pressurized water reactor, fuel elements which can be reused in accordance with a predetermined loading plan being inserted at fuel element positions for which irradiated and reusable fuel elements of this type are available, **characterized in that** reusable fuel elements which are bent and are inserted at the edge of the core are in the process oriented in such a manner that the maximum extent of their bending lies on an outer side of the core.

**2.** Method according to Claim 1, **characterized in that** the plan for the positions at the edge of the core provides for fuel elements with a reactivity which is below the mean of the core.

**3.** Method according to Claim 1 or 2, **characterized in that** bent fuel elements are used in fuel element positions which are adjacent to the fuel element positions at the edge of the core, and these bent fuel elements are oriented in such a manner that their bends face towards the edge of the core.

**4.** Core of a freshly reloaded pressurized water reactor, in which irradiated and bent fuel elements are inserted in fuel element positions at the edge of the core, **characterized in that** these fuel elements at the edge are oriented in such a manner that the maximum extent of their bending lies on an outer side of the core.

**5.** Core according to Claim 4, **characterized in that** each fuel element at a position at the edge of the core and each fuel element which adjoins such a fuel element is either practically not bent or has a bend which faces away from the core.

**6.** Core according to one of Claims 4 or 5, **characterized in that** the fissile mass of each fuel element arranged at the edge is below the mean of all the fuel elements of the core.

**Revendications**

**1.** Procédé d'assemblage du coeur d'un réacteur à eau sous pression, en utilisant sur des positions d'assemblages combustibles, pour lesquelles des assemblages combustibles irradiés et pouvant être réutilisés suivant un plan de charge déterminé à l'avance sont disponibles, des assemblages combustibles pouvant être réutilisés de ce genre, **caractérisé en ce que** l'on oriente des assemblages combustibles pouvant être réutilisés, qui ont une flexion et qui sont utilisés sur le bord du coeur, de façon à ce que le maximum de leur courbure s'applique à un côté extérieur du coeur.

**2.** Procédé suivant la revendication 1, **caractérisé en ce que** le plan prévoit, pour les positions sur le bord du coeur, des assemblages combustibles ayant une réactivité inférieure à la valeur moyenne de la réactivité du coeur.

**3.** Procédé suivant la revendication 1 ou 2, **caractérisé en ce que** dans des positions d'assemblages combustibles qui sont voisines des positions des assemblages combustibles au bord du coeur, on utilise des assemblages combustibles ayant une flexion et on les oriente de façon que leur courbure soit tournée vers le bord du coeur.

**4.** Coeur d'un réacteur à eau sous pression, rechargé fraîchement, dans lequel il est utilisé, dans des positions d'assemblages combustibles au bord du coeur, des assemblages combustibles irradiés et ayant une flexion, **caractérisé en ce que** ces assemblages combustibles sont orientés sur le bord de façon à ce que le maximum de leur courbure s'applique à un côté extérieur du coeur.

5. Coeur suivant la revendication 4, **caractérisé en ce que** chaque assemblage combustible sur une position au bord du coeur et chaque assemblage combustible voisin d'un assemblage combustible de ce genre n'est pratiquement pas fléchi ou a une courbure qui est tourné du coeur vers l'extérieur.

6. Coeur suivant l'une des revendications 4 ou 5, **caractérisé en ce que** la masse fissile de chaque assemblage combustible disposé au bord est inférieure à la valeur moyenne de celle de tous les assemblages combustibles du coeur.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13